# EUROPEAN PATENT APPLICATION

(11) **EP 3 141 782 A1**
(43) Date of publication of application: **15.03.2017**
(21) Application number: 15184481.8
(22) Date of filing: 09.09.2015
(51) Int. Cl.: F16K 5/06, F16K 27/06, B21D 53/10

(54) **BALL VALVE**

(71) Applicant: Vexve Oy, 38200 Sastamala (FI)
(72) Inventor: Rantala, Jari, 38210 Sastamala (FI); Randell, Jari, 20660 Littoinen (FI); Nieminen, Pasi T, 23800 Laitila (FI)
(74) Representative: Papula Oy

(57) **Abstract**

A ball valve, comprising a valve body (100) having an inlet (101) and an outlet (102); two valve seats (120); a ball member (110) arranged between the valve seats (120) and between the inlet (101) and the outlet (102), said ball member (110) pivotably mounted in the valve interior; the inner surface of the valve body (100) comprising at least one conical portion (104), wherein the smaller end of the conical portion (104) is pointed from the ball member (110) towards the inlet (101) or the outlet (102). A valve seat (120) comprises an annular seal housing (123) configured to support a first seal element (121) and a second seal element (122), wherein the first seal element (121) is configured to sealingly engage with the ball member (110) and the second seal element (122) is configured to sealingly engage with the conical portion (104) of the valve body (100).

## Description

### BACKGROUND

The disclosure herein relates to ball valves, more particularly to a ball valve seal and a method to manufacture a ball valve. Ball valves may be used in the district heating systems configured to distribute heat with hot water. Other applications for ball valves are hydronic heating systems or delivery of water or other fluids with pipes. A common problem for ball valves is that they have a long lifetime, which requires reliable functioning. Fixing the water based piping system may be expensive and usually causes maintenance pauses in the delivery system. Reliability of the ball valve may be achieved by using fewer components that are prone to failure. Another objective for the ball valve manufacturing is to save excess material. One example of saving material is to manufacture the ball valve from a tubular material. Furthermore, manufacturing the ball valve from a tubular material requires that the valve seals operate correctly during and after the manufacturing process. The components may be sealed inside the valve body, thereby not being serviceable, creating a further need for the ball valve seal's reliable operation.

WO2014202093 discloses a valve seat that is arranged in the valve housing and is resiliently bearing against the valve body. The valve seat includes a resilient structural part where the spring action from the resilient structural part acts in a direction which is substantially in parallel with the flow direction of the valve, and where the resilient structural part includes at least one annular flange part adapted for direct or indirect bearing on the valve body. The resilient valve seat or seats include a fixing member for mechanical fixing of the valve seat in a valve housing, the fixing member including means, for example a flange part, fixed in a valve housing by plastic deformation of the valve housing and/or by plastic deformation of the means.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A ball valve may be manufactured from tubular sheet metal, for example from a metal tube. The metal tube is deformed by applying pressure to the tube to form a valve body. The deformation process may be completed without producing sharp edges inside the valve body in the direction of the fluid flow. The valve body is produced sequentially with conical portions towards the inlet and the outlet. A valve seat has two portions that are installed to the conical portions near the inlet and the outlet. The valve seat has a rigid support structure comprising an annular seal housing. The annular seal housing provides support to the first seal configured to compress against a ball member and a second seal that is configured to compress against the conical portion of the valve body.

The arrangement allows manufacturing of a symmetric, bidirectional ball valve. The structure is rigid and does not require welding during the manufacturing. The seals inside the valve may not endure the excess heat produced by the welding; therefore, the deformation by pressure is easier to the seals. The solution allows selecting of seal materials that have characteristics better suited for temperatures at which the ball valve will be used.

Many of the attendant features will be more readily appreciated as they become better understood by reference to the following detailed description considered in connection with the accompanying drawings. The embodiments described below are not limited to implementations which solve any or all of the disadvantages of known ball valves or methods of manufacturing ball valves.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a simplified cross-sectional illustration of an exemplary embodiment of a ball valve;
Fig. 2 illustrates one example of the manufacturing method; and
Fig. 3 illustrates a cross-sectional view of one example of the stem bush assembly.

### DETAILED DESCRIPTION

Reference will now be made in detail to the exemplary embodiments of the present invention, examples of which are illustrated in the accompanying drawings. The embodiments described herein may be used in any combination with each other. Several of the embodiments may be combined together to form a further embodiment. The device may comprise at least one of the embodiments described hereinbefore. It is to be understood that any of the above embodiments or modifications can be applied singly or in combination to the respective aspects to which they refer, unless they are explicitly stated as excluding alternatives.

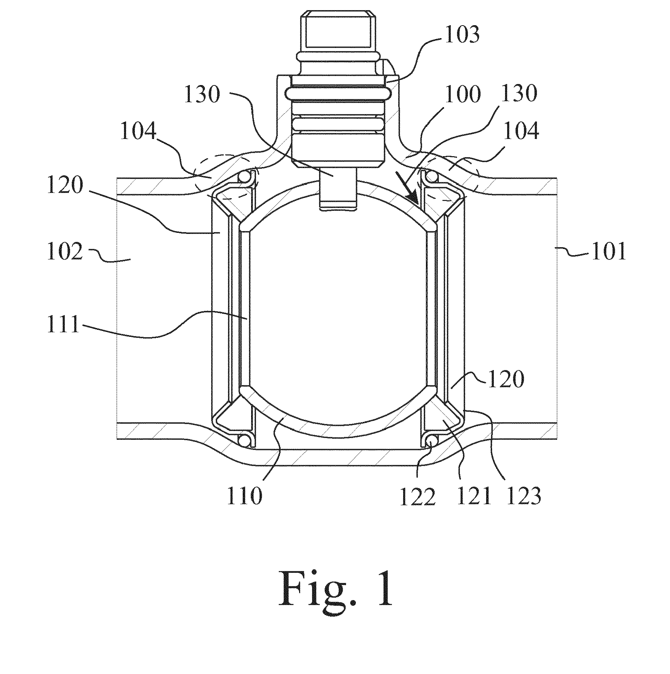

Figure 1 shows a simplified cross-sectional drawing of a ball valve. The valve body 100 has a seat 120 arranged for the ball member 110. An inlet 101 and an outlet 102 can be connected to piping to allow fluids to flow through the valve. Fluids may be either gasses or liquids. The ball member 110 has at least partially a spherical outer surface and includes a port 111 extending through the ball member 110. The ball member 110 is rotatable between a closed position in which the flowing of the fluid from the inlet 101 to the outlet 102 through the port 111 is hindered, and an open position in which the flowing of the fluid from the inlet 101 to the outlet 102 is allowed through the port 111. Exemplary applications for the ball valve are district heating systems, district cooling systems, cooling fluid distribution systems, natural gas distribution system, primary/secondary building services and plumbing.

A stem 130 is attached to the ball member 110 for rotating the ball member 110 around an axis of rotation. The valve body 100 comprises a stem bush 103 to support the stem 130. The stem 130 can be rotated by turning a handle connected to the stem 130. In one embodiment an actuator is configured to rotate the stem 130. The ball member 110 inside the valve body 100 is rotated from a closed to an open position by turning the handle for about 90 degrees. The ball valve may be used for regulating a fluid.

The ball valve comprises two valve seats 120 arranged on the opposite sides of the ball member 110 inside the valve body 100. The ball member 110 is pivotably mounted in the valve interior and held in place by the valve seats 120. The inner surface of the valve body 100 comprises at least one conical portion 104, wherein the smaller end of the conical portion 104 is pointed from the ball member 110 towards the inlet 101. Another conical portion 104 may be arranged on the opposite side of the valve body 100, wherein the smaller end of the conical portion 104 is pointed from the ball member 110 towards the outlet 102. In an embodiment the valve body 100 is made of tubular sheet metal, for example from a predefined tubular workpiece suitable for deformation. In one embodiment the valve seat arrangement as described hereinbefore is provided only on one side of the ball valve, either on the inlet 101 or on the outlet 102. In one embodiment the ball valve 123 is bidirectional, wherein the inlet 101 is suitable as an outlet 102 and, vice versa, the outlet 102 is suitable as an inlet 101.

The valve seat 120 comprises an annular seal housing 123 configured to support a first seal element 121 and a second seal element 122. The first seal element 121 is configured to sealingly engage with the ball member 110, while the annular seal housing 123 supports the other side of the first seal element 121. In an embodiment the annular seal housing 123 is configured to position the first seal element 121 and the second seal element 122, for example during the manufacturing process.

In an embodiment the first seal element 121 is made of PTFE. In an embodiment the first seal element 121 is made of soft material such as rubber or a composite material. In one embodiment the first seal element is made of hard material such as metal or a composite material. In an embodiment the annular seal housing 123 provides rigidity to the first seal element. In an embodiment the annular seal housing is made of sheet metal.

The second seal element 122 is configured to sealingly engage with the conical portion 104 of the valve body 100. In an embodiment the second seal element 122 is configured to resiliently engage the valve seat 120 against the valve body 100. The second seal element 122 provides flex to the valve seat 120 that may be utilized in the manufacturing process. In an embodiment the second seal element 122 is an O-ring. The O-ring is a mechanical gasket in the shape of a torus, a loop of elastomer with a round cross-section. In one embodiment the annular seal housing 123 provides a groove suitable for the O-ring to be positioned correctly. In an embodiment the second seal element 122 is made of rubber or bitumen.

In some circumstances the ball valve may build overpressure inside the valve body 100. The pressure may result from a temperature difference between the inlet 101, outlet 102 and/or the ball valve. As an example, in one embodiment the temperature difference of 10°C between the fluid inside the ball valve and outside the ball valve may cause a pressure of 8 bars. In one embodiment the annular seal housing 123 and the first seal element 121 release the overpressure from inside the ball valve according to arrow 130. The first seal element 121 has a shape allowing the pressure to be released from the middle of the annular valve seat 120. The contact between the first seal element 121 and the ball member 110 comprises a sharp angle from the direction of the arrow 130. The sharp angle is one feature that allows the overpressure to be released from inside the ball valve.

The valve seat 120 is configured as a floating seal configuration inside the valve body 100. The valve body 100 may act as a functional element of the valve seat 120. The valve seat 120 may provide flexibility in both directions in the axis of fluid flow. A torque of a ball valve determines the force required to turn the stem 130. The annular seal housing 123 may be selected to define the torque of the ball valve. Different shapes of the annular seal housing 123 and in one embodiment the shape of the first seal element 121 define the nominal torque. Different shapes and stiffness configurations for the annular seal housing 123 allow different torques to be selected for the ball valve.

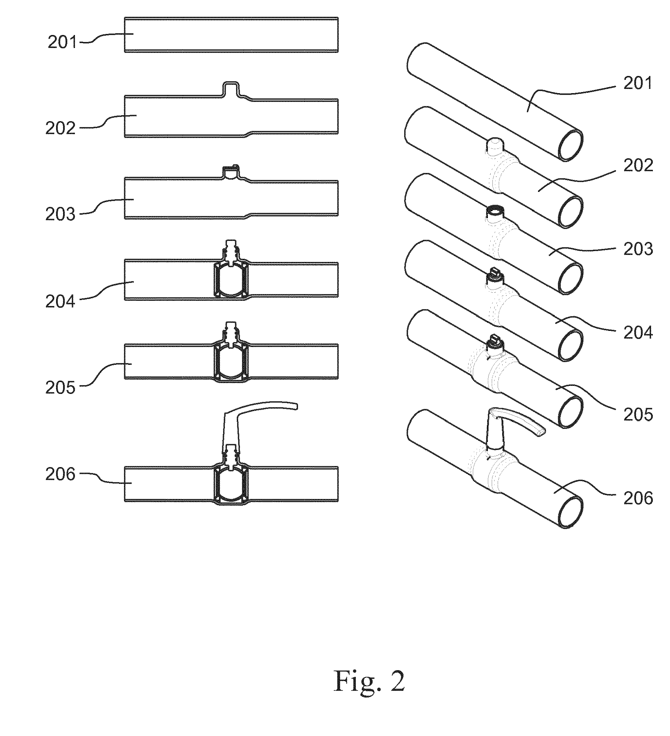

Figure 2 illustrates one example of the manufacturing method, highlighting the transformations of the product achieved by the process. The illustrated ball valve is only an example and is not limiting the design of the ball valve to the illustrated example. In the first step 201 of the method of manufacturing the ball valve, tubular sheet metal or a metal tube is cut to the predefined length. The material of the metal tube is suitable for deformation and the material thickness is suitable to function in the final product.

In step 202, a portion of the tubular sheet metal is expanded to form a first portion of the valve body. One example of expanding the tubular sheet metal is hydroforming the metal tube into a die configured to form the outer surface of the first portion of the valve body and applying a high pressure hydraulic fluid to press the metal tube into the die. This produces a uniform body, wherein the inner surface of the valve body follows the outer surface. In one embodiment a stem bush is formed after expanding the tubular sheet metal. In one embodiment the stem bush is hydroformed during step 202. In step 203 the formed tubular sheet metal is machined; for example grooves or threads may be arranged to the stem bush. After this step, the inner surface of the valve body has a first conical portion and the remaining portion of the tubular sheet metal forms a first end of the ball valve.

A first valve seat is formed from a first annular seal housing supporting the first seal element and the second seal element according to the description hereinbefore. In step 204, the ball member is positioned against the first valve seat, the first seal element sealingly engaging with the ball member and the second seal element sealingly engaging with the first conical portion of the valve body. A second valve seat is formed from a second annular seal housing supporting the third seal element and the fourth seal element. The second annular seal housing may be identical to the first valve seat. The second valve seat is positioned against the ball member, wherein the third seal element is sealingly engaging with the ball member.

In step 205, a portion of the expanded tubular sheet metal is contracted to form a second portion of the valve body and a second end of the ball valve. The contraction may be executed by applying pressure to the outer surface of the expanded tubular sheet metal. The inner surface of the valve body forms a second conical portion. The second valve seat is in position, and as a result of the contraction the fourth seal element is sealingly engaging with the second conical portion of the valve body. In step 206, the ball valve is assembled and machined according to the product description, for example by assembling or machining the inlet and/or outlet interconnections or the stem handle.

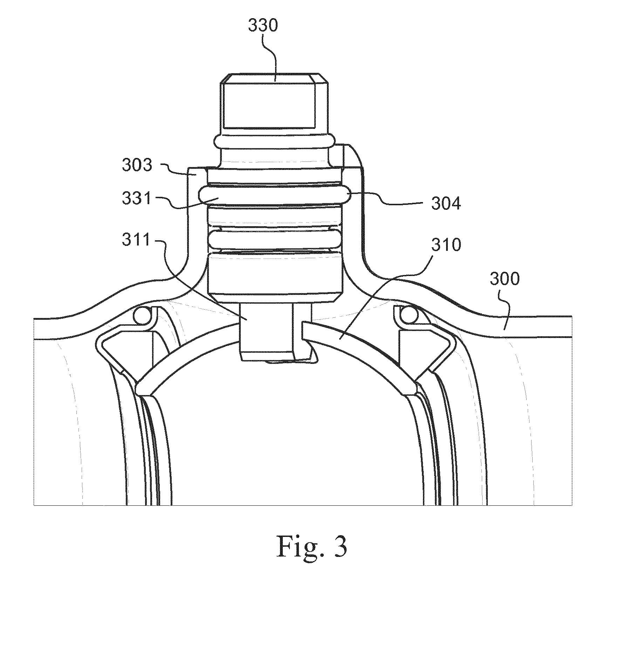

Figure 3 illustrates a cross-sectional view of one example of the stem assembly. In one embodiment of the method for manufacturing a ball valve, the method comprises connecting the stem 330 to the ball member 310 by pressing the stem 330 through the stem bush 303 to a receiving portion 311 of the ball member 310. The stem bush 303 is arranged in the valve body 300. In one embodiment the stem bush 303 comprises a groove 304 and the stem 330 comprising a retaining ring 331 configured to fasten the stem 330 to the stem bush 303. A retaining ring 331 is a fastener that holds the stem 330 on the stem bush 303 when installed in a groove 304. The exposed portion of the retaining ring 331 acts as a shoulder which retains the stem 330 in place.

One aspect discloses a ball valve, comprising: a valve body having an inlet and an outlet; two valve seats; a ball member arranged between the valve seats and between the inlet and the outlet, said ball member pivotably mounted in the valve interior; the inner surface of the valve body comprising at least one conical portion, wherein the smaller end of the conical portion is pointed from the ball member towards the inlet or the outlet, wherein at least one valve seat comprises an annular seal housing configured to support a first seal element and a second seal element; wherein the first seal element is configured to sealingly engage with the ball member and the second seal element is configured to sealingly engage with the conical portion of the valve body. In an embodiment the second seal element is configured to resiliently engage the valve seat against the valve body. In an embodiment the second seal element is an O-ring. In an embodiment the first seal element is configured to release overpressure from inside the ball valve to the inlet or the outlet between the contact point between the ball member and the first seal element. In an embodiment the valve body is made of tubular sheet metal. In an embodiment the annular seal housing is configured to position the first seal element and the second seal element. In an embodiment the annular seal housing is made of sheet metal. In an embodiment the ball valve is bidirectional.

One aspect discloses a method of manufacturing a ball valve, comprising: tubular sheet metal; a ball member; a first seal element; and a second seal element. The method comprises expanding a portion of the tubular sheet metal to form a first portion of the valve body, the inner surface of the valve body having a first conical portion, and the remaining portion of the tubular sheet metal to form a first end of the ball valve; forming a first valve seat from a first annular seal housing supporting the first seal element and the second seal element; positioning the ball member against the first valve seat, the first seal element sealingly engaging with the ball member and the second seal element sealingly engaging with the first conical portion of the valve body. In one embodiment the ball valve comprises a third seal element and a fourth seal element, and the method comprises forming a second valve seat from a second annular seal housing supporting the third seal element and the fourth seal element; positioning the second valve seat against the ball member, the third seal element sealingly engaging with the ball member; contracting a portion of the expanded tubular sheet metal to form a second portion of the valve body and a second end of the ball valve, the inner surface of the valve body forming a second conical portion; and the fourth seal element sealingly engaging with the second conical portion of the valve body. In an embodiment the method comprises forming a stem bush after expanding the tubular sheet metal. In an embodiment the method comprises forming a stem bush by hydroforming the tubular sheet metal. In an embodiment the method comprises connecting the stem to the ball member by pressing the stem through the stem bush to a receiving portion of the ball member. In an embodiment the stem bush comprises a groove and the stem comprising a retaining ring configured to fasten the stem to the stem bush. In an embodiment the second seal element resiliently engages the first valve seat against the valve body.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A ball valve, comprising:
a valve body (100) having an inlet (101) and an outlet (102);
two valve seats (120);
a ball member (110) arranged between the valve seats (120) and between the inlet (101) and the outlet (102), said ball member (110) pivotably mounted in the valve interior;
the inner surface of the valve body (100) comprising at least one conical portion (104), wherein the smaller end of the conical portion (104) is pointed from the ball member (110) towards the inlet (101) or the outlet (102), **characterized by**:
at least one valve seat (120) comprising an annular seal housing (123) configured to support a first seal element (121) and a second seal element (122);
wherein the first seal element (121) is configured to sealingly engage with the ball member (110) and the second seal element (122) is configured to sealingly engage with the conical portion (104) of the valve body (100).

2. The ball valve according to claim 1, **characterized in that** the second seal element (122) is configured to resiliently engage the valve seat (120) against the valve body (100).

3. The ball valve according to claim 1 or claim 2, **characterized in that** the second seal element (122) is an O-ring.

4. The ball valve according to any of the claims 1 to 3, **characterized in that** the first seal element (121) is configured to release overpressure from inside the ball valve to the inlet (101) or the outlet (102) between the contact point between the ball member (110) and the first seal element (121).

5. The ball valve according to any of the claims 1 to 4, **characterized in that** the valve body (100) is made of tubular sheet metal.

6. The ball valve according to any of the claims 1 to 5, **characterized in that** the annular seal housing (123) is configured to position the first seal element (121) and the second seal element (122).

7. The ball valve according to any of the claims 1 to 6, **characterized in that** the annular seal housing (123) is made of sheet metal.

8. The ball valve according to any of the claims 1 to 7, **characterized in that** the ball valve is bidirectional.

9. A method of manufacturing a ball valve, comprising:
tubular sheet metal;
a ball member (110);
a first seal element (121); and
a second seal element (122),
**characterized in that** the method comprises:
expanding a portion of the tubular sheet metal to form a first portion of the valve body (100), the inner surface of the valve body (100) having a first conical portion (104), and the remaining portion of the tubular sheet metal to form a first end of the ball valve;
forming a first valve seat (120) from a first annular seal housing (123) supporting the first seal element (121) and the second seal element (122),
positioning the ball member (110) against the first valve seat (120), the first seal element (121) sealingly engaging with the ball member (110) and the second seal element (122) sealingly engaging with the first conical portion (104) of the valve body (100).

10. The method according to claim 9, **characterized by** the ball valve comprising a third seal element and a fourth seal element,
forming a second valve seat (120) from a second annular seal housing (123) supporting the third seal element and the fourth seal element; and
positioning the second valve seat (120) against the ball member (110), the third seal element sealingly engaging with the ball member (110);
contracting a portion of the expanded tubular sheet metal to form a second portion of the valve body (100) and a second end of the ball valve, the inner surface of the valve body (100) forming a second conical portion (104); and
the fourth seal element sealingly engaging with the second conical portion (104) of the valve body (100).

11. The method according to claim 9 or claim 10, **characterized by** forming a stem bush (303) by hydroforming the tubular sheet metal.

12. The method according to any of the claims 9 to 11, **characterized by** connecting the stem (330) to the ball member (110) by pressing the stem (330) through the stem bush (303) to a receiving portion of the ball member (110).

13. The method according to claim 12, **characterized by** the stem bush (303) comprising a groove and the stem (330) comprising a retaining ring configured to fasten the stem (330) to the stem bush (303).

14. The method according to any of the claims 9 to 13, **characterized by** the second seal element (122) resiliently engaging the first valve seat (120) against the valve body (100).

15. The method according to any of the claims 9 to 14, **characterized by** the second seal element (122) and the fourth seal element being an O-ring.

16. The method according to any of the claims 9 to 15, **characterized by** the first seal element (121) and the third seal element being made of PTFE.
